# DEMANDE DE BREVET EUROPEEN

(11) **EP 1 550 534 A1**
(43) Date de publication de la demande: **06.07.2005**
(21) Numéro de dépôt: 04300873.9
(22) Date de dépôt: 09.12.2004
(51) Int. Cl.: B25J 19/00

(54) **Dispositif de distribution de fluide pour un robot**

(30) Priorité: 24.12.2003 FR 0351196
(71) Demandeur: ABB PROCESS INDUSTRIE, 73100 AIX LES BAINS (FR)
(72) Inventeur: BUSINARO, Laurent, 73410, SAINT GIROD (FR); GORY, Patrice, 38570, THEYS (FR)
(74) Mandataire: Palix, Stéphane

(57) **Abrégé**

Dispositif de distribution de fluide (1), permettant l'alimentation en fluides d'un bras de robot mécanique (51), à partir d'au moins deux sources de fluides, comprenant :
- une partie fixe ou stator (2), incluant des connexions (22-,24) auxdites sources de fluides ;
- une partie mobile (10) en rotation ou rotor, apte à se déplacer avec le bras de robot, et comprenant une pluralité de connexions (32,35) pour la liaison avec ledit bras de robot ;
- une pluralité de canaux (30,23,25) cheminant au travers du rotor (10) et du stator (2), pour permettre la mise en communication des connexions du stator (22,24) et du rotor (32,35) pendant le mouvement de rotation du bras de robot,
caractérisé en ce que le rotor (10) comporte:
- une série de canaux (30) cheminant au travers d'une partie centrale (11) du rotor, l'étanchéité au passage entre le rotor et le stator étant assurée par des joints (28) au contact avec le rotor et le stator ;
- une série de conduits (34) cheminant au travers d'une partie périphérique (20) du rotor, la continuité entre les portions (25,34) desdits canaux et conduits situés respectivement sur le stator et le rotor se faisant au niveau de zone sans contact, avec un jeu mécanique réduit (37).

## Description

### Domaine technique

L'invention se rattache au domaine des installations industrielles robotisées, utilisant l'énergie hydraulique ou pneumatique.

Elle vise plus particulièrement un dispositif de distribution de fluide, permettant l'alimentation en fluides d'un robot mécanique. Elle concerne plus spécifiquement des agencements de ces dispositifs de distribution destinés à améliorer la cinématique la fiabilité, et la maintenance de l'installation.

### Techniques antérieures

De manière générale, les installations robotisées comportent un outil articulé, dont les segments peuvent être déplacés les uns par rapport aux autres par l'intermédiaire d'actionneurs, et notamment de vérins hydrauliques ou pneumatiques.

L'alimentation de ces différents vérins nécessite que les fluides moteurs soient acheminés à partir d'une source de fluide qui est fixe, vers les vérins qui sont donc mobiles. Cet acheminement se fait généralement par l'aide de conduits flexibles qui sont d'une part fixés à une extrémité au bras de l'outil du robot, et d'autre part connectés aux sources de fluides. On conçoit que ce type de liaison pose un problème lorsque le bras de l'outil est amené à effectuer une rotation sur lui-même, puisque la longueur des conduits flexibles limite la rotation possible.

Des solutions ont été proposées pour permettre l'alimentation en fluides quel que soit le mouvement en rotation de l'outil. Pour ce faire, le robot est associé à un dispositif de distribution qui comporte une partie fixe ou stator, reliée aux sources de fluides, à une partie mobile, reliée au robot, également appelée rotor, qui comporte des connexions avec les parties consommatrices de fluides du robot. Des canaux cheminant à travers le rotor et le stator sont agencés pour permettre la mise en communication des connexions du rotor et du stator, pendant le mouvement de rotation du robot. Compte tenu du mouvement relatif entre le rotor et le stator, il est nécessaire de maintenir une étanchéité entre ces différents canaux, par l'intermédiaire de joints tournants. Ces joints tournants, fréquemment toriques, assurent un contact entre le rotor et le stator, dans leurs zones en regard. La multiplicité des canaux génère fréquemment un problème d'encombrement.

En outre, compte tenu des pressions relativement élevées qu'il est nécessaire d'acheminer au niveau du robot, les contraintes d'étanchéité sont généralement sévères. Les joints mis en place présentent donc une surface de contact avec le rotor et le stator qui est importante, et qui génère donc par conséquent un niveau de frottement élevé. Ces frottements, qui sont d'autant plus importants que le nombre de canaux est élevé, génèrent un couple résistant qui limite la vélocité du mouvement de rotation du robot. Un problème que cherche à résoudre l'invention est donc la limitation des niveaux de frottement observés dans les systèmes de joints tournants à canaux multiples.

Par ailleurs, la multiplication des joints sur différents canaux est un obstacle au démontage de l'installation, et notamment à la séparation du rotor et du stator lors des opérations de maintenance.

### Exposé de l'invention

L'invention concerne donc un dispositif de distribution de fluides, permettant l'alimentation en fluides d'un robot mécanique, à partir d'au moins deux sources de fluides.

De façon connue, un tel dispositif comporte une partie fixe, appelée stator, comportant des connexions auxdites sources de fluides, par l'intermédiaire de flexibles notamment.

Ce dispositif comporte également une partie mobile en rotation, également appelée rotor, qui se déplace avec le robot, et qui comprend également une pluralité de connexions pour la liaison avec le robot. Cet ensemble formé du rotor et du stator comporte une pluralité de canaux qui cheminent au travers du rotor et du stator pour permettre la mise en communication des connexions du rotor et du stator, pendant le mouvement de rotation du robot.

Conformément à l'invention, le rotor comporte deux séries de canaux, à savoir :
- une première série de canaux qui cheminent à travers la partie centrale du rotor, et dont l'étanchéité au passage entre le rotor et le stator est assurée par des joints tournants, en contact avec le rotor et le stator ;
- une seconde série de canaux, qui cheminent à travers une partie périphérique du rotor ; la continuité entre les portions des canaux au niveau de la jonction entre le rotor et le stator, se fait au niveau d'une zone sans contact, avec un jeu mécanique réduit.

Autrement dit, l'invention consiste à concevoir le dispositif de distribution de fluide en distinguant deux catégories de canaux d'alimentation en fluides. Certains de ces canaux transitent en partie par la portion centrale du rotor. Pour ces canaux, l'interface entre le rotor et le stator est muni de joints d'étanchéité, pour garantir le maintien de la pression des fluides entre les différents canaux.

Une autre série de canaux traverse la partie externe du rotor, et ne transite donc pas par la portion centrale du rotor. L'étanchéité au niveau des zones d'interface entre le rotor et le stator est assurée non pas par des dispositifs générant des frottements, mais par des zones sans contact, dont le jeu est calculé pour limiter les fuites à des niveaux acceptables compte tenu des applications.

Ainsi, un tel dispositif est plus particulièrement approprié pour faire circuler, au niveau du rotor interne, des fluides à fort gradient de pression, et typiquement des fluides moteurs, pour bénéficier de l'étanchéité assurée par des joints tournants. A l'inverse, les fluides circulant dans les canaux de la portion périphérique du rotor seront préférentiellement des fluides circulant à un débit important, et donc à un niveau de pression ou dépression plus réduit. On notera donc que ce niveau de fuite contrôlé au niveau des sorties du rotor externe confère une quasi-étanchéité sans générer aucun frottement mécanique. Il est donc possible d'obtenir des accélérations angulaires relativement importantes, vis-à-vis de systèmes de l'art antérieur dont toutes les alimentations de fluides nécessitent une étanchéité par joint tournant.

Avantageusement, en pratique, le rotor peut donc être composé de deux parties assemblées, à savoir une partie centrale et une portion périphérique, l'essentiel des connexions avec le bras du robot se trouvant donc sur cette portion périphérique. Avantageusement, ces deux parties du rotor sont assemblées de manière amovible, par des moyens mécaniques qui permettent donc de désolidariser la portion périphérique du rotor par rapport au reste de l'installation.

Grâce à cette disposition, la partie périphérique du rotor peut être séparée de l'installation, et notamment de la partie interne du rotor et du stator, pour les opérations de maintenance et de nettoyage. Il est ainsi possible d'accéder aux extrémités des portions des canaux cheminant dans le stator, puisque ces derniers débouchent dans la zone du stator qui est recouverte par la portion périphérique du rotor, et qui est donc apparente lorsque cette portion périphérique du rotor est extraite.

Avantageusement, en pratique, la portion périphérique du rotor est mécaniquement solidaire de l'outil du robot, de sorte que le démontage de l'installation, par la séparation des parties interne et périphérique du rotor, n'oblige pas la déconnexion des différentes conduites flexibles reliant la portion périphérique du rotor et l'outil du robot.

### Description sommaire des figures

La manière de réaliser l'invention, ainsi que les avantages qui en découlent, ressortiront bien de la description du mode de réalisation qui suit, à l'appui des figures annexées dans lesquelles :
- la figure 1 est une vue en coupe longitudinale d'un dispositif de distribution conforme à l'invention, accouplé à un outil de robot ;
- la figure 2 est une vue de détail de la zone Il de la figure 1 ;
- les figures 3, 4 et 5 sont des vues en coupe transversales selon les plans III-III', IV-IV' et V-V' de la figure 1.

### Manière de réaliser l'invention

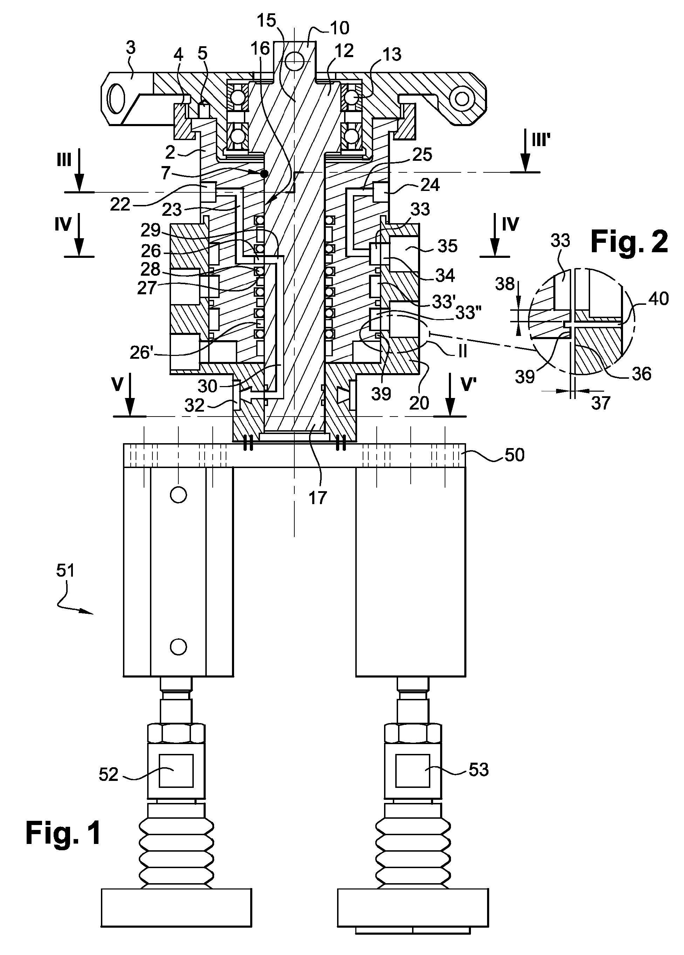

Comme illustré à la figure 1, l'invention concerne un dispositif de distribution de fluides destinés à alimenter les différents composants pneumatiques ou hydrauliques d'un outil de robot, à partir de différentes sources de fluides non représentées. Plus précisément, ces différentes sources de fluides, qui peuvent être hydrauliques ou pneumatiques, correspondant à différentes sorties d'électrovannes intégrées dans un ensemble fixe.

Comme illustré à la figure 1, le dispositif de distribution (1) comporte un stator (2) relié à une référence mécanique fixe (non représentée) par l'intermédiaire d'un châssis (3). La partie du stator (2) assurant la conduction des fluides est fixée sur le châssis (3) par l'intermédiaire d'un écrou (4). Des moyens de détrompage (5) sont prévus pour assurer l'indexage du stator par rapport au châssis (3).

Le stator (2) comporte dans sa partie centrale un évidement (7) apte à accueillir la partie centrale (11) du rotor (10). Dans sa partie haute (12), la partie centrale (11) du rotor est équipée de roulements (13) permettant la rotation du rotor (10) par rapport à la référence mécanique fixe.

Comme déjà exposé, ce rotor (10) est constitué de deux parties, à savoir la partie centrale (11) située au niveau de l'axe de rotation (15) de l'ensemble, et une partie périphérique (20) solidarisée à la partie centrale (11), et s'étendant latéralement autour de la partie basse du stator (2). La portion périphérique (20) du rotor est mécaniquement reliée au châssis (50) de l'outil (51), dont la forme illustrée à la figure 1 comporte deux bras articulés (52,53), sans rapport direct avec l'invention.

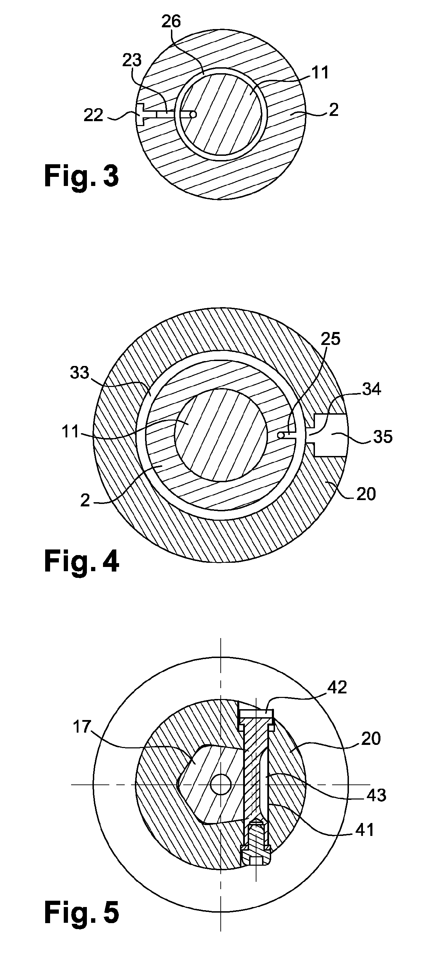

Conformément à l'invention, le stator (2) comporte un ensemble de chambres (22,24) formant des connexions aptes à recevoir les extrémités de conduits flexibles eux-mêmes reliés à différentes sources de fluide. Ces chambres (22,24) se prolongent par des canalisations (23,25) percées à l'intérieur du stator (2), qui sont de deux types différents. Ainsi, la canalisation (23) débouche dans la partie centrale du stator, au niveau de l'évidement (26) recevant le rotor (11). Cette canalisation (23) débouche, comme illustré à la figure 3, au niveau d'un congé annulaire (26) parcourant la circonférence de la surface interne (7) du stator. Différents congés annulaires (26,26') sont prévus au niveau de cette surface interne (7) du stator, correspondant chacune à une canalisation en liaison avec une chambre du stator (22) apte à recevoir la connexion d'une conduite flexible. Les différents congés annulaires (26,26') prévus sur la surface interne du stator sont séparés par des joints (28) insérés dans des rainures annulaires (27). Ces joints (28) sont typiquement des joints toriques qui assurent l'étanchéité d'un congé (26,26') à l'autre. Ces joints (28) sont au contact de la rainure annulaire (27) formée dans le stator, et de la surface cylindrique (16) de la partie centrale (11) du rotor.

Bien entendu, ces joints toriques peuvent être remplacés par un contact direct entre des zones de la surface externe du rotor, et des zones en regard de la face interne du stator, avec un choix de matières appropriées, par exemple en céramique usinable , assurant l'étanchéité, mais en générant un certain couple résistant.

En regard du congé annulaire (26) du stator, le rotor (11) présente une canalisation interne (29), qui débouche vers sa face cylindrique (16), et qui se prolonge longitudinalement vers le bas (30) pour déboucher à nouveau sur la face cylindrique (16) du rotor interne (11). Cette canalisation se prolonge à travers la portion périphérique (20) du rotor, pour déboucher au niveau d'une zone de connexion (32) apte à recevoir une conduite flexible (non représentée) reliée par son autre extrémité à un circuit pneumatique ou hydraulique monté sur l'outil (51) du robot.

En pratique, les canalisations (30) traversant le rotor interne sont plus particulièrement destinées à alimenter les vérins provoquant la déformation des bras (52) du robot, et sont donc parcourues par des fluides à haute pression, typiquement de l'ordre de quelques bars pour les circuits hydrauliques.

Selon une autre caractéristique de l'invention, le stator (2) comporte des canalisations (25) qui ne débouchent pas sur sa face interne, mais au contraire sur sa face externe (39), comme illustré à la figure 1. Ces canalisations (25) mettent donc en communication une connexion (24) destinée à être reliée aux sources de fluides, avec une chambre (33) circonférentielle. Cette chambre (33) du stator vient au regard d'un conduit (34) du rotor externe (20), lui-même débouchant dans une chambre de connexion (35) avec un conduit flexible (non représenté) relié à l'outil. De la sorte, quelle que soit la position angulaire du rotor (10) par rapport au stator (2), la chambre de connexion (35) du rotor se trouve automatiquement connectée à la source de fluide correspondante.

Comme illustré à la figure 2, l'étanchéité par rapport à la chambre (33) est assurée par un dimensionnement précis de la surface externe (39) du stator, par rapport à la surface interne (36) du rotor périphérique (20). Plus précisément, le jeu (37) qui s'étend sur toute la circonférence du stator, présente une valeur calibrée qui, combinée avec sa hauteur (38), génère des pertes de charges suffisantes pour limiter les fuites à un niveau satisfaisant pour l'application souhaitée. Ainsi, l'étanchéité entre les différentes chambres adjacentes (33,33',33") est assurée par ce jeu caractéristique (37), et sans contact mécanique.

Conformément à une autre caractéristique de l'invention, et comme illustré à la figure 2, le rotor périphérique peut comporter un ensemble d'orifices (40) mettant en communication le jeu caractéristique (37) avec l'atmosphère. De la sorte, les différentes chambres adjacentes (33,33',33") sont découplées pneumatiquement. On élimine ainsi les risques de fuites d'une chambre adjacente à l'autre. Autrement dit, ces orifices (40) permettent d'annuler les dépressions et les surpressions résultant des fuites générées dans le jeu caractéristique (37), afin de ne pas perturber le fonctionnement des chambres adjacentes.

Conformément à une autre caractéristique de l'invention, le rotor périphérique (20) est solidarisé au rotor interne (11) par des moyens débrayables, comme illustré à la figure 5. Plus précisément, le rotor interne (11) présente dans sa partie basse (17) une géométrie particulière, permettant d'assurer un détrompage par rapport au rotor périphérique (20). Le rotor périphérique (20) comporte une ouverture traversante recevant un axe pivotant (42). Cet axe pivotant (42) traverse un logement de forme complémentaire ménagé dans la partie basse (17) du rotor interne. Cet axe pivotant (42) possède également un évidement (43) de dimensions appropriées pour permettre le dégagement du rotor interne (17) après une certaine rotation. Ainsi, dans la forme illustrée à la figure 5, le rotor périphérique (20) se trouve solidarisé au rotor interne (11). Après une rotation de 180° de l'axe (42), l'évidement (43) réalisé dans l'axe (42) se trouve en regard du rotor interne (17), laissant ainsi libre le mouvement du rotor périphérique (20) par rapport au rotor interne. Grâce à cette manipulation simple, il est ainsi possible de désolidariser le rotor périphérique (20), et donc l'outil (50) du reste de l'installation. Dans ce cas, la face externe du stator, et donc toutes les chambres (33,33',33") se trouve apparentes et aptes à un nettoyage aisé. Cette disposition s'avère particulièrement avantageuse pour les canalisations fonctionnant sous dépression, et à l'intérieur desquelles s'accumulent les poussières et autres matières pulvérulentes aspirées, notamment pour des applications agroalimentaires.

Il ressort de ce qui précède que l'invention présente de multiples avantages, et notamment :
- il autorise un démontage aisé du dispositif de distribution des fluides, facilitant ainsi les opérations de nettoyage et de maintenance ;
- l'étanchéité est assurée sans augmenter trop fortement le couple résistant, ce qui permet au robot de fonctionner à une vitesse angulaire plus élevée à puissance équivalente.

## Revendications

1. Dispositif de distribution de fluide (1), permettant l'alimentation en fluides d'un bras de robot mécanique (51), à partir d'au moins deux sources de fluides, comprenant :
• une partie fixe ou stator (2), incluant des connexions (22-,24) auxdites sources de fluides ;
• une partie mobile (10) en rotation ou rotor, apte à se déplacer avec le bras de robot, et comprenant une pluralité de connexions (32,35) pour la liaison avec ledit bras de robot ;
• une pluralité de canaux (30,23,25) cheminant au travers du rotor (10) et du stator (2), pour permettre la mise en communication des connexions du stator (22,24) et du rotor (32,35) pendant le mouvement de rotation du bras de robot,
**caractérisé en ce que** le rotor (10) comporte deux séries de canaux, à savoir :
- une première série de canaux (30) cheminant au travers d'une partie centrale(11) du rotor, l'étanchéité au passage entre le rotor et le stator étant assuré par des joints (28) au contact avec le rotor et le stator ;
- une seconde série de canaux (25) cheminant au travers d'une partie périphérique (20) du rotor, la continuité entre les portions (25,34) desdits canaux situés respectivement sur le rotor et le stator se faisant au niveau de zone sans contact, avec un jeu mécanique réduit (37).

2. Dispositif selon la revendication 1, **caractérisé en ce que** le rotor (10) est composé de deux parties assemblées, à savoir une partie centrale (11) et une portion périphérique (20) comprenant les connexions (35) pour la liaison avec le bras de robot.

3. Dispositif selon la revendication 2, **caractérisé en ce que** les deux parties du rotor (11,20) sont assemblées de manière amovible par des moyens mécaniques (42).

4. Dispositif selon la revendication 1, **caractérisé en ce qu'**il comporte des orifices de mise à l'atmosphère (40), débouchant dans les zones de jeu mécanique réduit (37), entre deux canaux adjacents (33,33').

5. Dispositif selon la revendication 2, **caractérisé en ce que** les extrémités (33,33',33") des portions de canaux situés dans le stator (2) débouchent dans la zone du stator recouverte par la portion périphérique (20) du rotor.
